# EUROPÄISCHE PATENTSCHRIFT

(11) **EP 0 877 823 B1**
(45) Veröffentlichungstag und Bekanntmachung des Hinweises auf die Patenterteilung: **10.01.2001**
(21) Anmeldenummer: 97908127.0
(22) Anmeldetag: 27.01.1997
(51) Int. Cl.: C21C 5/52, C21C 7/068

(54) **ERZEUGUNG NICHTROSTENDER STÄHLE IN PARALLEL BETRIEBENEN GEFÄSSEN**
PRODUCING STAINLESS STEELS IN PARALLEL OPERATED VESSELS
PRODUCTION D'ACIERS INOXYDABLES DANS DES CUVES FONCTIONNANT EN PARALLELE

(30) Priorität: 31.01.1996 DE 19605020; 15.05.1996 DE 19621143
(43) Veröffentlichungstag der Anmeldung: 18.11.1998
(73) Patentinhaber: SMS Demag AG, 40237 Düsseldorf (DE)
(72) Erfinder: ROSE, Lutz, D-47259 Duisburg (DE); VORWERK, Hartmut, D-47229 Duisburg (DE); KAPPES, Horst, D-47051 Duisburg (DE); ULRICH, Klaus, D-42579 Heiligenhaus (DE)
(74) Vertreter: Meissner, Peter E., Dipl.-Ing.
(86) Internationale Anmeldenummer: DE9700171
(87) Internationale Veröffentlichungsnummer: WO9728285

(56) Entgegenhaltungen:
- EP-A- 0 035 487
- EP-A- 0 116 720
- EP-A- 0 331 751
- GB-A- 784 587
- US-A- 3 507 642
- US-A- 3 575 696
- US-A- 4 599 107
- STEEL IN THE USSR, Bd. 19, Nr. 2, Februar 1989, LONDON,GB, Seiten 61-62, XP000070901 YU. V. GRAVILENKO: "production of stainless steel"
- DATABASE WPI Derwent Publications Ltd., London, GB; AN 84-002177 c01 XP002035532 "mfg. nitrogen-cont. ultra low carbon stainless steel" & JP 58 197 211 A (NIPPON STAINLESS) , 16.November 1983

## Beschreibung

Die Erfindung betrifft ein Verfahren zur Erzeugung nichtrostender Stähle, insbesondere chrom- und chromnickelhaltiger Edelstähle, in einer mindestens zwei Gefäße umfassenden Schmelzeinrichtung zur Versorgung einer Stahlgießanlage.

Üblicherweise wird bei der Erzeugung chromhaltiger sowie rostfreier, chromnickel enthaltender Stähle ein Elektroofen konventioneller Bauart eingesetzt, der als Gleichstrom- oder Wechselstromofen ausgeführt ist, in dem Schrott und/oder anderer eisenhaltiger metallischer Rohstoff, z.B. Roheisen oder DRI (Direct Reduced Iron) zusammen mit einer adäquaten Menge von Legierungsträgern eingeschmolzen wird. Das dabei erschmolzene Vormaterial wird mit einer Temperatur von 1670 bis 1700 °C in eine Pfanne abgestochen. Diese Pfanne wird anschließend in einen Konverter entleert und die ca. 2,5 % Kohlenstoff und ca. 1 % Silicium enthaltende Schmelze wird zunächst mittels Sauerstoff und bei reduzierten Kohlenstoffgehalten mit Sauerstoff/Stickstoff- und später Sauerstoff/Argon-Gemischen gefrischt.

Je nach Anwendung unterschiedlicher Verfahrenstechniken wird dabei die Entkohlung bis zu Endkohlenstoffgehalten unter 0,1 % durchgeführt, wobei damit einhergehende Chromverluste in der Schlacke anschließend durch Reduktion mit Ferrosilicium oder Sekundär-Aluminium wieder zurückgewonnen werden müssen.

Weiterhin ist bekannt, in einer 3-stufigen Verfahrenstechnik das Metall des Konverters bei Kohlenstoffgehalten von ca. 0,2 - 0,3 % abzustechen und anschließend in einem separaten Vakuum-Oxydationsverfahren auf die Endkohlenstoffgehalte hinzuführen.

Den bisher bekanntgewordenen Verfahren ist gemeinsam, daß durch ein- oder mehrmaliges Umfüllen der Schmelze hohe Temperaturverluste entstehen, die durch eine hohe Abstichtemperatur und damit hohen Energieaufwand im Primärschmelzgefäß, hier dem Elektrolichtbogenofen, kompensiert werden müssen. Dies bedingt neben dem höheren Energieaufwand ebenfalls erhöhten Elektroden- und Feuerfest-Verschleiß im Elektroofen. Für die Installation des für den zweiten Prozeßschritt notwendigen Konverters werden vergleichsweise große Bauhöhen für das umgebende Gebäude benötigt, um die Blaslanze und das Abgassystem aufzunehmen.

Die Erfindung hat sich daher das Ziel gesetzt, ein Verfahren zur Erzeugung nichtrostender Stähle zu schaffen, bei dem die Prozeßschritte verringert, der Energieverbrauch bei den einzelnen Prozeßschritten reduziert und die Betriebsaggregate in geringer Bauhöhe ausgestaltbar sind.

Die Erfindung erreicht dieses Ziel durch die kennzeichnenden Verfahrensschritte des Anspruchs 1. Vorteilhafte Weiterbildungen dieses Verfahrens sind in den nachfolgenden Ansprüchen angegeben.

Das erfindungsgemäße Verfahren wird in einer Schmelzeinrichtung durchgeführt, die mindestens zwei Gefäße umfaßt. Beide Gefäße werden parallel betrieben, wobei in jedem Gefäß entweder Elektroden zum Einschmelzen der Charge oder Blaslanzen zum Aufblasen und/oder Einblasen von Sauerstoff und Sauerstoffgemischen einsetzbar sind. Die Gefäße dienen also zunächst als Einschmelz- und danach als Frischaggregat. Dies hat den Vorteil,daß ohne Temperaturverluste durch Umfüllen, die Schmelze bearbeitet und auf die gewünschte Temperatur gebracht werden kann. Zeitlich versetzt werden in jedem Gefäß Schrott, Ferronickel, Nickel, Ferrochrom und andere metallisches Eisen enthaltende Rohstoffe vorzugsweise mittels elektrischer Energie eingeschmolzen. Dabei entsteht ein Vormetall, das zum größten Teil aus Eisen besteht, und einen Chrom- und Nickelgehalt besitzt, der nahe an der Endanalyse der zu erzeugenden Stahlqualität, im wesentlichen Austenite, Ferrite und Martensite, liegt. Bei Einsatz von hoch kohlenstoff- und/oder siliziumhaltigem Ferrochrom wird in einer vorteilhaften Ausgestaltung mittels einer Lanze Sauerstoff eingeblasen, wodurch der Siliziumgehalt gemindert wird. Nach Erreichen einer Schmelzentemperatur von 1500 bis 1600 °C wird bei demselben Gefäß der Elektrodenarm ausgeschwenkt, eine Sauerstofflanze eingeschwenkt und mit dieser sowie mit Düsen, die sich im Boden und/oder in der Gefäßseitenwand befinden, Sauerstoff sowie Gemische mit Stickstoff, Argon, Kohlenwasserstoff, Dampf die Schmelze oxidiert. Bei einer mittleren Blasezeit von 20 bis 40 min., einem Sauerstoffeinsatz von 0,1 bis 2,0 Nm³/t x min. für die Sauerstofflanze und o.g. Einblasdüsen wird die Schmelze auf einen Endkohlenstoffgehalt von 0,10 bis 0,015 % entkohlt.

Die durch den Blasprozeß frei werdende Wärmemenge kann genutzt werden, um Kühlmittel in Form von Ni, FeNi, Ferrochrom, Schrott, sowie andere eisenhaltige metallische Rohstoffe wie Roheisenmassen, DRI oder Legierungsmittel zuzugeben, um die Zielanalyse und die Zieltemperatur einzustellen.

Nach dem Blasen wird die Schlacke mit Reduktionsmittel wie z.B. Ferrosilizium, Aluminium oder Sekundäraluminium bei Zugabe von Schlackenbildnern wie Kalk und Flußspat zur Rückgewinnung von oxidiertem Chrom reduziert und der produzierte Stahl und/oder die Schlacke abgestochen, das Gefäß wiederum mit Schrott und Legierungsträgern befüllt und diese mittels eingeschwenkter Elektroden aufgeschmolzen.

Der Einschmelzprozeß und der anschließende Blasprozeß läuft in dem jeweiligen Gefäß nacheinander und zwischen den Gefäßen synchron ab, so daß nach jeweils 80 bis 120 min. aus einem Gefäß eine Schmelze bereitgestellt werden kann, d.h. bei synchroner Produktion beider Gefäße steht für die weiterverarbeitende Stranggießanlage somit alle 40 bis 60 min. eine Schmelze bereit.

Dieser zeitgleiche Einsatz zweier Gefäße hat nicht nur diesen Vorteil d.h. die kontinuierliche Versorgung einer Stranggießanlage, sondern ist auch aus energetischen Gründen vorteilhaft. Nach dem Einschmelzen im ersten Gefäß kann beispielsweise die aus dem Gefäß herausgezogene -noch heiße - Elektrode in das zweite Gefäß eingeführt werden, um dort mit dem Einschmelzen zu beginnen. Dies verringert den Energieaufwand und den Elektrodenverlust.

Da der bis zu niedrigsten Kohlenstoffgehalten durchgeführte Blaseprozeß naturgemäß zu einer hohen Beanspruchung des Feuerfest-Materials im Gefäßherd führt, kann der Blaseprozeß als Variante auch bei einem Kohlenstoffgehalt von 0,2 - 0,4 % abgebrochen werden. In diesem Fall würden Metall und Schlacke ebenfalls gemeinsam in eine Pfanne entleert, die Schlacke durch Dekantieren sowie mittels Kratzern entfernt, die Pfanne mit der Metallschmelze in ein nach dem Stand der Technik arbeitendes Vakuumgefäß mit der Möglichkeit zum Blasen von Sauerstoff überführt und auf einen Endkohlenstoffgehalt gefrischt.

In keinem der o.g. Fälle wäre bei diesem Prozeß die aufwendige Installation eines Konverters für den Blaseprozeß notwendig, womit die Investitionskosten für den Prozeß entscheidend verringert werden können. Ebenso entfällt das mit Energieverlusten verbundene Umfüllen des mit elektrischer Energie eingeschmolzenen Vormetalls, insbesondere aus einer Transportpfanne in den Konverter, um den Kohlenstoffgehalt mittels Sauerstoff herauszufrischen.

Um im besonderen Maße das Silizium zu oxydieren wird vorgeschlagen, während des Einschmelzens der Charge Sauerstoff zuzugeben. Zum Einsatz kommt hier zur Vermeidung besonderer baulicher Maßnahmen eine Türlanze.

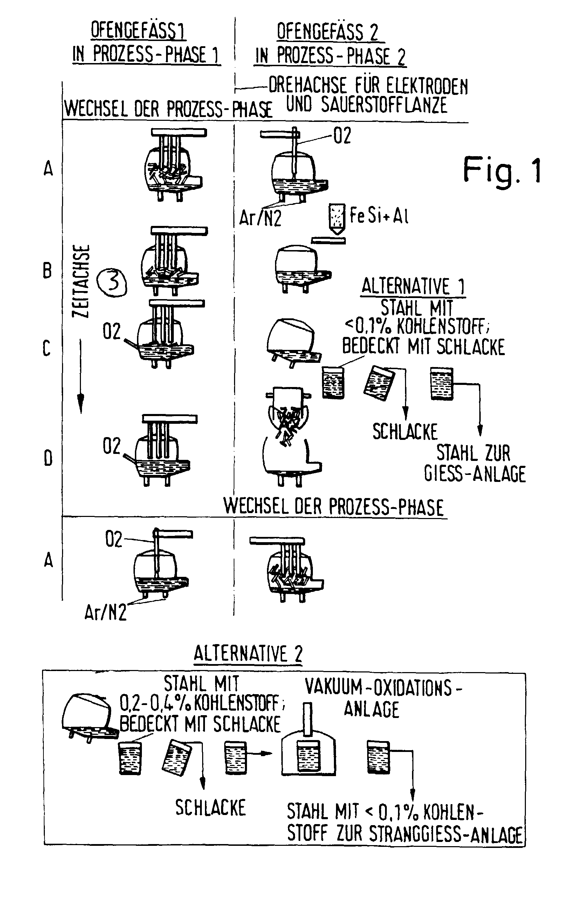

Ein Beispiel der Erfindung ist in der beiliegenden Zeichnung dargestellt. Dabei zeigt die
- Figur 1: eine Skizze der einzelnen Schritte.

Betrachtet man in der Prozeßphase 1 das Ofengefäß 1, so befindet sich zum Zeitpunkt A im Ofengefäß ein geringer Sumpf, auf dem sich neu eingefüllte Charge befindet. Das Ofengefäß ist durch einen Deckel geschlossen, durch welchen Elektroden in das Obergefäß des Ofens ragen. In der Phase B wird die Charge mittels elektrischer Energie eingeschmolzen. Dabei steigt der Flüssigbadpegel im Untergefäß des Ofens. In der Phase C ist die Charge, im wesentlichen bestehend aus Schrott, Ferronickel, Nickel, Ferrochrom und anderen eisenhaltigen metallischen Stoffen nahezu vollständig zu flüssigem Vormetall eingeschmolzen. Bei Einsatz von hoch kohlenstoff- und/oder siliziumhaltigen Legierungsmitteln kann mittels einer Lanze Sauerstoff eingeblasen werden, wodurch der Siliziumgehalt gemindert wird.

In der Phase D ist das Vormaterial vollständig erschmolzen, wobei die Schmelze eine Temperatur von 1500 bis 1600°C aufweist. Bei dem Gefäß 1 wird für einen Wechsel zu einer weiteren Prozeßphase die Elektrodeneinrichtung aus dem Gefäß entfernt und eine Sauerstofflanze eingeschwenkt. In der vorliegenden Skizze ist die Prozeßphase 2 beim Ofengefäß 2 dargestellt, da diese Prozeßphase im Gefäß 2 zeitgleich zur Prozeßphase 1 des Ofengefäßes 1 (und umgekehrt) abläuft.

Im Schritt A der Prozeßphase 2 wird mit einer Lanze sowie mit Bodendüsen und/oder Seitendüsen die Schmelze oxidiert, wobei Sauerstoff oder ein Sauerstoffgemisch verwendet wird.
Bei den Boden- oder Seitendüsen handelt es sich um konzentrische Düsen. Diese bestehen aus einem Außenrohr, einem Ringspalt und einem Zentralrohr. Durch das Zentralrohr kann Sauerstoff oder ein Sauerstoffgemisch bestehend aus O₂ + N₂, O₂ + Ar oder O₂ + Luft eingeführt werden. Durch den Ringspalt wird parallel N₂ oder Ar oder Kohlenwasserstoff oder Dampf oder ein Gemisch aus diesen Gasen geblasen.

Nach Erreichen des Endkohlenstoffgehaltes und der Abstichtemperatur von 1620 bis 1680°C wird die Schmelzenschlacke zur Rückgewinnung oxidierten Chroms durch ein Reduktionsmittel wie Ferrosilizium oder Aluminium reduziert und anschließend Metall und Schlacke gemeinsam abgestochen.

Im Schritt C kann alternativ die Schmelze auf einen Endkohlenstoffgehalt von z.B. 0,05 % entkohlt werden oder bei einem Kohlenstoffgehalt von 0,2 bis 0,4 % nach Abtrennen der Schlacke in eine Vakuumanlage überführt und dort auf den gewünschten Endkohlenstoffgehalt gebracht werden. Anschließend wird der fertige Stahl abgestochen.

Im Schritt D wird der Ofen mit einer neuen Charge aus Schrott und teilweise Kohlenstoff enthaltenden Legierungsträgern eingefüllt, wobei sich im Ofengefäß ein Sumpf befinden kann.

Anschließend beginnt wiederum der Schritt A, wie bereits oben aufgeführt.

## Patentansprüche

1. Verfahren zur Erzeugung nichtrostender Stähle, insbesondere chrom- und chromnickelhaltiger Edelstähle, in einer mindestens zwei Gefäße umfassenden Schmelzeinrichtung zur Versorgung einer Stahlgießanlage,
gekennzeichnet durch folgende Schritte:
a) in einem ersten Gefäß wird die Charge, im wesentlichen bestehend aus festen und/oder flüssigem metallisches Eisen enthaltenden Rohstoffen, insbesondere Schrott, und teilweise Kohlenstoff enthaltenden Legierungsträgern eingeschmolzen,
b) nach Erreichen einer Temperatur von 1460 °C wird die im ersten Gefäß verbliebene Schmelze durch Blasen von Sauerstoff oder Sauerstoffgemischen bis auf einen Kohlenstoffgehalt < 0,3 % entkohlt und auf eine Abstichtemperatur von 1620 bis 1720°C erwärmt und
c) anschließend dort auf einen Endkohlenstoffgehalt von < 0,1 % gebracht, wobei
d) zeitgleich neben dem entkohlenden Verblasen der Charge im ersten Gefäß der Schmelzprozeß einer zweiten Charge in dem zweiten Gefäß durchgeführt wird.

2. Verfahren nach Anspruch 1,
dadurch gekennzeichnet,
daß nach Erreichen des Endkohlenstoffgehaltes und der Abstichtemperatur die Schmelzenschlacke durch ein Reduktionsmittel, insbesondere Ferrosilizium, Silizium oder Aluminium, reduziert und anschließend zusammen mit dem Metall gemeinsam abgestochen wird.

3. Verfahren nach Anspruch 1,
dadurch gekennzeichnet,
daß das Blasen von Sauerstoff oder Sauerstoffgemischen durchgeführt wird in Form von Aufblasen kombiniert mit Bodenblasen und/oder Seitenblasen.

4. Verfahren nach einem der vorgenannten Ansprüche,
dadurch gekennzeichnet,
daß bei einer Blasezeit des Sauerstoffs von 20 bis 40 min. die Schmelze auf einen Endkohlenstoffgehalt von ≤0,05 % entkohlt wird.

5. Verfahren nach Anspruch 4,
dadurch gekennzeichnet,
daß während des Sauerstoffaufblasens der Schmelze ein metallisches Kühlmittel zugegeben wird.

6. Verfahren nach einem der Ansprüche 1 bis 3,
dadurch gekennzeichnet,
daß der Blasprozeß bei einem Kohlenstoffgehalt von ca. 0,2 bis 0,3 % und einer Temperatur von ca. 1650°C abgebrochen wird, die Schlacke mit Ferrosilizium oder Aluminium reduziert wird, Schlacke und Metall gemeinsam in eine Pfanne entleert werden, die Schlacke durch Dekantieren und Abkratzen entfernt wird und das Metall in der Pfanne auf den gewünschten Endkohlenstoffgehalt < 0,1 % gebracht wird.

7. Verfahren nach einem der Ansprüche 1 bis 3,
dadurch gekennzeichnet,
daß die Schmelze durch Vakuumentgasung auf den gewünschten Endkohlenstoffgehalt < 0,1 % gebracht wird.

8. Verfahren nach Anspruch 1,
dadurch gekennzeichnet,
daß die Charge mittels elektrischer Energie eingeschmolzen wird.

9. Verfahren nach Anspruch 7,
dadurch gekennzeichnet,
daß während des Einschmelzens der Charge vorzugsweise durch eine Türlanze Sauerstoff zur Siliziumoxidation zugegeben wird.

## Claims

1. Method for manufacturing stainless steels, in particular high-grade chrome- and chrome-nickel steels, in a smelting device comprising at least two vessels for the supply of a steel foundry, characterised by the following steps:
a) the charge, consisting essentially of raw materials containing solid and/or liquid metallic iron, in particular scrap, and in some cases carbon-containing alloy carriers, is melted down in the first vessel;
b) after reaching a temperature of 1460 °C, the melt remaining in the first vessel is decarburised to a carbon content of < 0.3% by blowing with oxygen or oxygen mixtures, and heated to a tapping temperature of 1620 - 1720 °C, and
c) afterwards, brought there to a final carbon content of <0.1%, with
d) the charge in the first vessel being decarburised with oxygen blowing, at the same time as a second charge is undergoing the melting process in the second vessel.

2. Method according to claim 1,
characterised in that
after reaching the final carbon content and the tapping temperature, the molten slag is reduced with a reductant, in particular ferrosilicon, silicon or aluminium, and is then tapped together with the metal.

3. Method according to claim 1,
characterised in that
the blowing of oxygen or oxygen mixtures is carried out in the form of top-blowing combined with bottom-blowing and/or side-blowing.

4. Method according to any one of the preceding claims,
characterised in that
with an oxygen blowing time of 20 - 40 minutes, the melt is decarburised to a final carbon content of ≤ 0.05%.

5. Method according to claim 4,
characterised in that
a metal coolant is added during the oxygen top-blowing of the melt.

6. Method according any one of claims 1 to 3,
characterised in that
the blowing process is broken off at a carbon content of approx. 0.2 to 0.3% and a temperature of approx. 1650 °C, the slag is reduced with ferrosilicon or aluminium, slag and metal are emptied together into a ladle, the slag is removed by decanting and scraping off, and the metal in the ladle in brought to the desired final carbon content of <0.1%.

7. Method according to any one of claims 1 to 3,
characterised in that
the melt is brought to the desired final carbon content of <0.1% by vacuum degassing.

8. Method according to claim 1,
characterised in that
the charge is melted down by means of electrical energy.

9. Method according to claim 7,
characterised in that
during the melting down of the charge, oxygen is injected for silicon oxidation, preferably by means of a door lance.

## Revendications

1. Procédé pour engendrer des aciers inoxydables, en particulier des aciers spéciaux contenant du chrome et du chrome-nickel, dans un dispositif de fusion comportant au moins deux récipients pour l'alimentation d'une installation de coulée d'acier,
caractérisé par les étapes suivantes :
a) dans un premier récipient, la charge, constituée essentiellement de matières brutes solides et/ou liquides contenant du fer métallique, en particulier des ferrailles, et partiellement de supports d'alliage contenant du carbone, est fondue,
b) après avoir atteint une température de 1460°C, la matière en fusion demeurant dans le premier récipient est décarburée par soufflage d'oxygène ou de mélanges d'oxygène jusqu'à une teneur en carbone inférieure à 0,3 % et réchauffée à une température de coulée de 1620 à 1720°C, et
c) amenée ensuite là à une teneur en carbone finale inférieure à 0,1 %,
d) le processus de fusion d'une seconde charge étant effectué dans le second récipient, simultanément, à côté du soufflage de décarburation de la charge dans le premier récipient.

2. Procédé selon la revendication 1,
caractérisé en ce que, après avoir atteint la teneur en carbone finale et la température de coulée, le laitier de matière en fusion est réduit par un agent réducteur, en particulier du ferrosilicium, du silicium ou de l'aluminium et, ensuite, est coulé, en commun, en même temps que le métal.

3. Procédé selon la revendication 1,
caractérisé en ce que le soufflage d'oxygène ou de mélanges d'oxygène est effectué sous forme d'un soufflage combiné à soufflage de fond et/ou soufflage latéral.

4. Procédé selon une des revendications précitées,
caractérisé en ce que, pour un temps de soufflage de l'oxygène de 20 à 40 mn, la matière en fusion est décarburée à une teneur en carbone finale inférieure ou égale à 0,05 %.

5. Procédé selon la revendication 4,
caractérisé en ce que, pendant le soufflage d'oxygène, il est ajouté, à la matière en fusion, un agent de refroidissement métallique.

6. Procédé selon une des revendications 1 à 3,
caractérisé en ce que le processus de soufflage est interrompu pour une teneur en carbone d'environ 0,2 à 0,3 % et une température d'environ 1650°C, le laitier est réduit par du ferrosilicium ou de l'aluminium, le laitier et le métal sont vidés en commun dans une poche de coulée, le laitier est éliminé par décantation et grattage, et le métal dans la poche de coulée est amené à la teneur en carbone finale souhaitée inférieure à 0,1 %.

7. Procédé selon une des revendications 1 à 3,
caractérisé en ce que la matière en fusion est amenée à la teneur en carbone finale souhaitée inférieure à 0,1 % par dégazage sous vide.

8. Procédé selon la revendication 1,
caractérisé en ce que la charge est fondue au moyen d'énergie électrique.

9. Procédé selon la revendication 7,
caractérisé en ce que, pendant la fusion de la charge, il est avantageusement ajouté de l'oxygène, pour l'oxydation du silicium, par une lance à porte.
